# EUROPEAN PATENT SPECIFICATION

(11) **EP 1 298 575 B1**
(45) Date of publication and mention of the grant of the patent: **12.01.2005**
(21) Application number: 02079087.9
(22) Date of filing: 18.09.2002
(51) Int. Cl.: G06K 11/08, H04N 7/18, G02B 27/02

(54) **Device for enlarged display of text or images on an external screen**
Gerät zur vergrösserten Wiedergabe von Text und Bildern auf einem externen Schirm
Dispositif pour l'affichage agrandi de texte ou d'images sur un écran externe

(30) Priority: 28.09.2001 NL 1019057
(43) Date of publication of application: 02.04.2003
(73) Proprietor: Tieman Holding B.V., 3194 DH Hoogvliet (NL)
(72) Inventor: Van Hees, Lukas Wilhelmus, 2275 BH Voorburg (NL)
(74) Representative: Lips, Hendrik Jan George, Ir.

(56) References cited:
- EP-A- 0 563 541
- US-A- 5 355 146
- NAKAO T ET AL: "AN IMAGE INPUT UNIT USING DIGITAL MOSAIC PROCESSING" NEC RESEARCH AND DEVELOPMENT, NIPPON ELECTRIC LTD. TOKYO, JP, vol. 40, no. 2, April 1999 (1999-04), pages 259-266, XP000924091 ISSN: 0547-051X

## Description

The invention relates to a device for enlarged display of text or images present on an object, onto an external screen, said device comprising a mirror which can be brought above the object.

Such a device is used at lectures, for example, in order to project an image onto a screen for the audience. This device is relatively voluminous and suitable for displaying an A4-format sheet in its entirety.

This known device is less suitable for use by a person having limited eyesight, who is not or hardly capable of reading the usual, relatively small, print of a daily or a like publication. EP-A-563 541, see figures 3 and 4, discloses a device according to the preamble of claim 1.

The object of the invention is to provide a device of limited volume that can be operated easily and to that end provides for, that the device comprises: a housing that can easily be enclosed by a hand in order to be put on an object, the bottom plane of the housing being provided with an aperture for observing at least part of the object; a mirror mounted within the housing enclosing an angle of almost 45° with the bottom plane of the housing; a camera of the CCD type following the mirror, comprising firstly a focussing member in the form of a sliding part being movable according to a line extending almost parallel to the bottom plane of the housing and being rotated simultaneously with the sliding movement, and secondly a camera housing coupled to said focussing member by means of threading, which housing can not be rotated but can only be moved in the direction of the axis, in which the signals of the camera are transmitted, possibly through a computer, to a display.

Thus, a display present with a computer can be used for enlarged display of a part of a daily or a like object.

Due to the fact that both parts of the camera are coupled to one another by screw-thread and one part will rotate on movement, when sliding the two parts, they will be spaced-apart at a larger or smaller distance.

The sliding and simultaneously rotating movement of the focussing member can be effected in that said focussing member is provided with a laterally projecting pin being located in a slot provided in a guiding member for supporting the camera housing, being situated outside said focussing member, said pen at the same time being received in a sliding block mounted on a rotatably supported threaded rod.

When the focussing member is slid by means of the sliding block, the pen connected to it will be moved through said slot in the guiding member. The slot will have a curved shape, in such a way, that on sliding the focussing member, it will start to rotate immediately. The camera housing will be moved simulataneously, but can not rotate, so that both parts will be engaged or be released from one another.

By choosing the appropriate form of the slot, it can be provided for, that one always achieves an optimum focus of the image shown on the display, and this independent from the distance of the housing to the object.

In particular, the housing of the device will be in the form of a mouse, as it is applied with a computer.

Therefore, when rotating the threaded rod by means of a motor, the switches present at such a mouse can be used for rotating the threaded rod in both directions.

Obviously, an externally mounted button can serve for rotating the threaded rod, but in general, using a motor is easier.

The invention is further explained by way of an embodiment, illustrated in the drawing, in which:
Fig. 1 shows schematically a cross-section across a device according to the invention on which an image can be displayed in an enlarged state;
Fig. 2 shows schematically a cross-section according to fig. 1, but with further indication of the members for moving the various parts; and
Fig. 3 shows a perspective view of a part of the guide and of the camera.

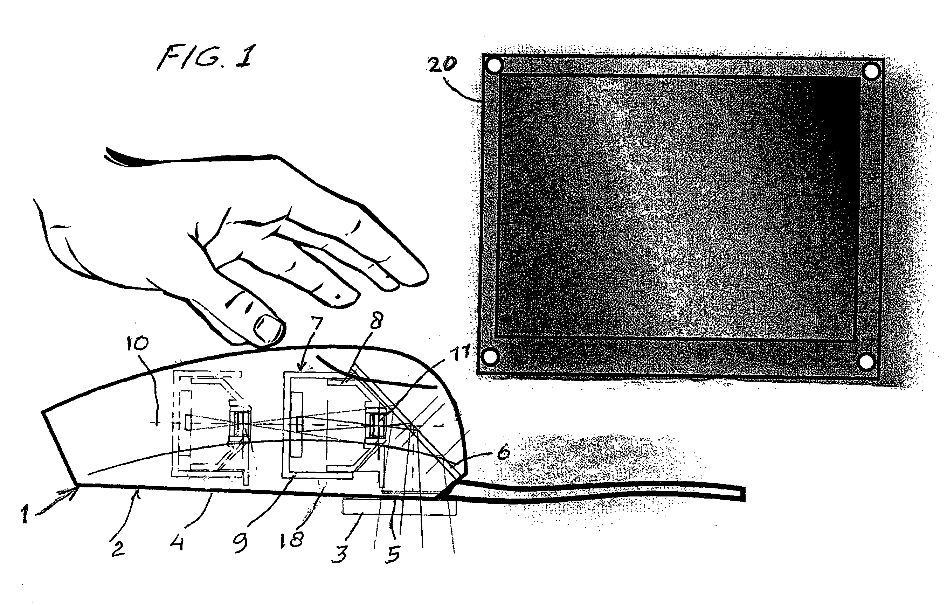

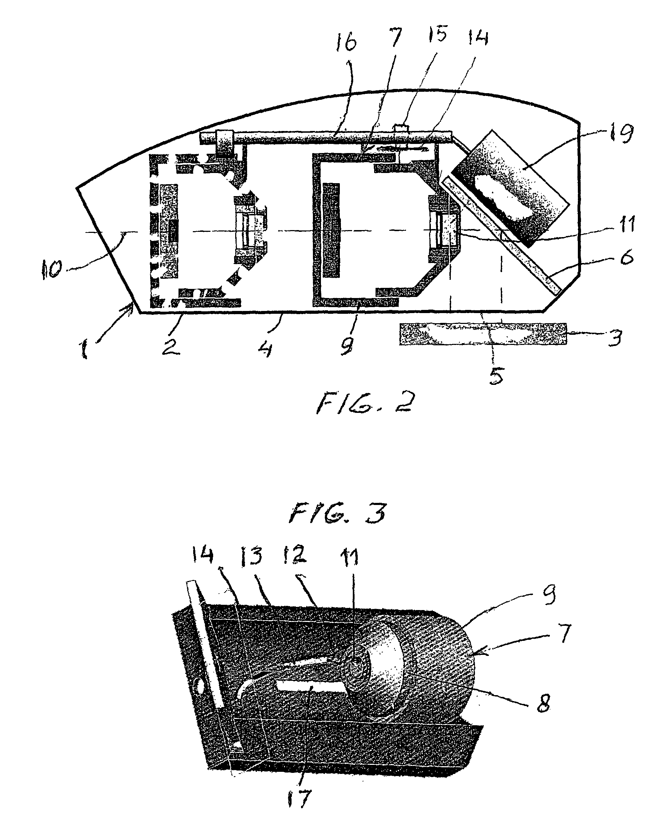

The figures 1 and 2 show the device, in which housing 2 is in the form of a computer mouse. Housing 2 is located above an object 3. For observing the object 3, an aperture 5 is provided in the bottom plane 4 of housing 2.

Situated withing housing 2 is the mirror 6 followed by the camera 7 comprising a focussing member 8 and a camera housing 9. The focussing member 8 is movable according to a line 10 extending almost parallel to the bottom plane 4 of housing 2. The lens 11 is located in the sliding part 8. In figures 1 and 2, the camera 7 is illustrated in two extreme positions, the first position being indicated in dashed lines.

As appears in particular from figure 3, focussing member 8 is provided with a pin 12 extending through a slot 13 in the guiding member 14. Pin 12 extends further in a slot, not further indicated, in a sliding block 15, which is slidable on a threaded rod 16. By rotation of the threaded rod 16, the sliding block 15 will be moved along it, since it can not rotate in relation to the threaded rod. The pin 12 will therefore perform a forced movement through the slot 13 and cause a slide and thereby a simultaneous rotation of focussing member 8. Latter rotation will cause the camera housing 9 to slide in relation to said focussing member 8. This appears in particular from figure 2.

The guiding member 14 is further provided with a slot 17 into which a protruding part 18, see figure 1, of camera housing 19 projects, so that it can only perform a rectilinear movement and is not capable of rotation.

The threaded rod 16 can be driven by means of the motor 19, which can be activated by means of switches not further indicated, which are operated by buttons situated on the housing 2.

The signals of the camera 7 are transmitted to a display 20 through a computer. A stepless enlargement can be obtained with the help of the device.

Although the use of said device by visually impaired persons is discussed hereinabove, obviously the device can also be applied for many other purposes. This will need no further explanation for an expert.

Further, it will be clear, that only one possible embodiment of a device according to the invention has been illustrated in the drawing and described above and that many changes can be made without being beyond the inventive idea, as it is indicated in the claims.

## Claims

1. Device for enlarged display of text or images present on an object (3), onto an external screen (20), said device comprising a mirror (6) which can be brought above the object, said device comprising:
a housing (2) that can easily be enclosed by a hand in order to be put on an object (3), the bottom plane (4) of the housing being provided with an aperture (5) for observing at least part of the object; a mirror (6) mounted within the housing (2) enclosing an angle of almost 45° with the bottom plane (4) of the housing; a camera (7) of the CCD type following the mirror (6), **characterized in that** said camera (7) comprises: firstly a focussing member (8) in the form of a sliding part being movable according to a line (10) extending almost parallel to the bottom plane (4) of the housing and being rotatable simultaneously with the sliding movement, and secondly a camera housing (9) coupled to said focussing member (8) by means of threading, which camera housing (9) can not be rotated but can only be moved in the direction of said line (10), in which the signals of the camera (7) are transmitted to a display (20).

2. Device according to claim 1, **characterized in that** the sliding and simultaneously rotating movement of the focussing member (8) is effected **in that** said focussing member is provided with a laterally projecting pin (12) being located in a slot (13) provided in a guiding member (14) for supporting the camera housing (9), being situated outside said focussing member (8), said pin at the same time being received in a sliding block (15) mounted on a rotatably supported threaded rod (16).

3. Device according to claim 2, **characterized in that** the threaded rod (16) is rotatable by means of a motor (19), in which the motor can be acuated by the switches present on the housing (12).

## Revendications

1. Dispositif pour l'affichage agrandi de texte ou d'images présents sur un objet (3), sur un écran extérieur (20), ledit dispositif comprenant un miroir (6) qui peut être amené au-dessus de l'objet, ledit dispositif comprenant :
un logement (2) qui peut être facilement contenu par une main afin d'être posé sur un objet (3), le plan de fond (4) du logement étant doté d'une ouverture (5) pour observer au moins une partie de l'objet ; un miroir (6) monté à l'intérieur du logement présentànt un angle de presque 45° avec le plan de fond (4) du logement ; une caméra (7) du type CDD suivant le miroir (6), **caractérisé en ce que** ladite caméra (7) comprend tout d'abord un élément de focalisation (8) sous la forme d'une partie de coulissement mobile selon une ligne (10) s'étendant presque parallèlement au plan de fond (4) du logement et pouvant entrer en rotation simultanément avec le mouvement coulissant, et ensuite un logement de caméra (9) accouplé audit élément de focalisation (8) au moyen d'un filetage, lequel logement de caméra (9) ne pouvant être mis en rotation mais pouvant seulement être déplacé dans la direction de ladite ligne (10), dans laquelle les signaux de la caméra (7) sont transmis à un affichage (20).

2. Dispositif selon la revendication 1, **caractérisé en ce que** le coulissement et le mouvement de rotation simultané de l'élément de focalisation (8) sont effectués, **en ce que** ledit élément de focalisation est doté d'une broche en projection latérale (12) située dans une fente (13) disposée dans un élément de guidage (14) pour supporter le logement de caméra (9), étant situé à l'extérieur dudit élément de focalisation (8), cette broche étant reçu en même temps dans un bloc coulissant (15) monté sur une tige filetée (16) supportée de façon rotative.

3. Dispositif selon la revendication 2, **caractérisé en ce que** la tige filetée (16) est mise en rotation au moyen d'un moteur (19), dans lequel le moteur peut être actionné par les commutateurs présents sur le logement (2).

## Patentansprüche

1. Vorrichtung zur vergrößerten Darstellung von an einem Gegenstand (3) vorhandenen Texten oder Bildern auf einem externen Bildschirm (20), wobei die Vorrichtung umfaßt: einen Spiegel (6), der über den Gegenstand gebracht werden kann, diese Vorrichtung umfassend: ein Gehäuse (2), das leicht von einer Hand umschlossen werden kann, um auf einen Gegenstand (3) aufgesetzt zu werden, wobei die untere Fläche (4) des Gehäuses mit einer Öffnung (5) zur Beobachtung wenigstens eines Teiles des Gegenstandes versehen ist; einen Spiegel (6), der innerhalb des Gehäuses (2) angebracht ist und einen Winkel von etwa 45° mit der unteren Fläche (4) des Gehäuses einschließt; eine auf den Spiegel (6) folgende Kamera (7) des CCD-Typs, **dadurch gekennzeichnet, daß** die Kamera (7) umfaßt: erstens ein fokusssierendes Glied (8) in Gestalt eines verschieblichen Teils, der entsprechend einer Linie (10) beweglich ist, welche etwa parallel zur unteren Fläche (4) des Gehäuses verläuft, und der gleichzeitig mit der Verschiebebewegung drehbar ist, und zweitens ein Kameragehäuse (9), das an das fokussierende Glied (8) mit Hilfe eines Gewindes angekoppelt ist, welches Kameragehäuse (9) nicht verdreht werden kann, sondern nur in der Richtung der Linie (10) bewegt werden kann, wobei die Signale der Kamera (7) auf eine Anzeige (20) übertragen werden.

2. Vorrichtung nach Anspruch 1, **dadurch gekennzeichnet, daß** die Verschiebeund gleichzeitig drehende Bewegung des fokussierenden Gliedes (8) dadurch bewirkt ist, daß das fokussierende Glied mit einem seitlich abstehenden Stift (12) versehen ist, der in einem Schlitz (13) angeordnet ist, welcher in einem Führungsglied (14) zur Abstützung des Kameragehäuses (9) vorgesehen ist, das außerhalb des fokussierenden Gliedes (8) gelegen ist, wobei der Stift gleichzeitig in einem Gleitblock (15) aufgenommen ist, der auf einer drehbar gelagerten Gewindestange (16) angeordnet ist.

3. Vorrichtung nach Anspruch 2, **dadurch gekennzeichnet, daß** die Gewindestange (16) mit Hilfe eines Motors (19) drehbar ist, wobei der Motor durch die am Gehäuse (12) vorhandenen Schalter betätigt werden kann.
